# EUROPÄISCHE PATENTANMELDUNG

(11) **EP 1 967 761 A2**
(43) Veröffentlichungstag der Anmeldung: **10.09.2008**
(21) Anmeldenummer: 08400003.3
(22) Anmeldetag: 13.02.2008
(51) Int. Cl.: F16H 1/46

(54) **Planetengetriebe**

(30) Priorität: 07.03.2007 DE 202007003419 U
(71) Anmelder: IMK AUTOMOTIVE GMBH, 09111 Chemnitz (DE)
(72) Erfinder: Leidholdt, Wolfgang, 08294 Lössnitz (DE)
(74) Vertreter: Steiniger, Carmen

(57) **Zusammenfassung**

Die vorliegende Erfindung betrifft ein schräg verzahntes Planetengetriebe (1) mit einem mittig angeordneten Sonnenrad (2), einem Planetenträger (3), wenigstens zwei von den Planetenträgern gehaltenen und mit dem Sonnenrad (2) in Eingriff stehenden Planetenrädern (4) und einem innenverzahnten Hohlrad (5), das mit den Planetenrädern (4) in Eingriff steht. Es ist die Aufgabe der vorliegenden Erfindung, ein schrägverzahntes Planetengetriebe (1) zur Verfügung zu stellen, das klein und leicht ist und zudem kostengünstig herstellbar ist. Diese Aufgabe wird durch ein Planetengetriebe (1) der oben genannten Gattung gelöst, bei welchem das Sonnenrad (2), die Planetenräder (4) und das Hohlrad (5) aus Kunststoff ausgebildet sind und die Planetenräder (4) ein Modul von etwa 0,1 mm bis 0,6 mm aufweisen.

## Beschreibung

Die vorliegende Erfindung betrifft ein schräg verzahntes Planetengetriebe mit einem mittig angeordneten Sonnenrad, einem Planetenträger, wenigstens zwei von den Planetenträgern gehaltenen und mit dem Sonnenrad in Eingriff stehenden Planetenrädern und einem innenverzahnten Hohlrad, das mit den Planetenrädern in Eingriff steht.

Ein Planetengetriebe der oben genannten Gattung ist im Stand der Technik als eine Bauform eines Zahnradgetriebes seit langem bekannt. Ein Planetengetriebe hat gegenüber einem herkömmlichen Stirnradgetriebe einige Vorteile: Die Last wird auf mehrere Planetenräder aufgeteilt. Planetengetriebe besitzen eine kompakte Bauform und haben daher einen geringen Platzbedarf. Durch die Innenverzahnung des Hohlrades sind die Zahnräder besonders kompakt angeordnet. Mit Planetengetrieben sind hohe Momente übertragbar, sie besitzen eine lange Lebensdauer und An- und Abtrieb befinden sich in gleicher Achse.

Bei der Schrägverzahnung der Zahnräder des Planetengetriebes sind die Zähne der Zahnräder nicht zur Rotationsachse des Planetengetriebes parallel angeordnet. Dadurch kann eine bessere Laufruhe und geringere Geräuschentwicklung des Planetengetriebes erzielt werden, da jedes Zahnpaar mit einem kontinuierlichen Übergang in und aus dem Eingriff läuft und somit die Übertragung des Drehmomentes gleichmäßiger verläuft. Außerdem kann gegenüber einem gerade verzahnten Rad mit gleichem Modul, gleicher Zähnezahl und gleicher Profilverschiebung eine höhere Kraft übertragen werden, weil der Teilkreisdurchmesser mit zunehmendem Schrägungswinkel steigt und die Berührlinienlänge ebenfalls steigt.

Durch die Schrägverzahnung tritt jedoch auch eine axiale Kraftkomponente auf, die auf das Axiallager der Sonnenräder wirkt und dort besonders kompensiert werden muss. In den Planetenrädern gleicht sich die Axialkraft aus.

Bei schrägverzahnten Planetengetrieben tritt auch eine größere Radialkraftkomponente auf, welche im Allgemeinen nicht störend ist, da die Zahnräder des Planetengetriebes eingeklemmt sind. Durch diese Konstruktion kann die Radialkraftkomponente von den Lagerungen ferngehalten werden, belastet aber die Zahnflanken der Zahnräder. Daher ist es notwendig, für die Zahnräder stabile Werkstoffe zu wählen. Die Radialkraft ist auch durch eine Verzahnungskorrektur minderbar.

Zudem ergibt sich bei schrägverzahnten Planetengetrieben das Problem, dass diese nur mit hohem Aufwand berechnet und dimensioniert werden können. Beispielsweise ist es besonders schwierig, eine schräge Evolvente in FEM abzubilden und damit Festigkeitsberechnungen durchzuführen.

Schrägverzahnte Zahnräder sind im Allgemeinen wesentlich schwerer als gerade verzahnte Zahnräder produzierbar. Je kleiner die schrägverzahnten Zahnräder sind, umso schwieriger sind sie herstellbar. Insbesondere gestaltet sich die Herstellung einer schrägen Innenverzahnung, wie sie bei dem Hohlrad eines schrägverzahnten Planetengetriebes notwendig ist, besonders schwer. Zudem sind für die Herstellung solcher Zahnräder sehr teure und komplizierte Werkzeuge notwendig.

Es ist daher die Aufgabe der vorliegenden Erfindung, ein schrägverzahntes Planetengetriebe zur Verfügung zu stellen, das klein und leicht ist und zudem kostengünstig herstellbar ist.

Diese Aufgabe wird durch ein Planetengetriebe der oben genannten Gattung gelöst, bei welchem das Sonnenrad, die Planetenräder und das Hohlrad aus Kunststoff ausgebildet sind und die Planetenräder ein Modul von etwa 0,1 mm bis 0,6 mm aufweisen.

Überraschenderweise besitzen die aus Kunststoff ausgebildeten kleinen Zahnräder des erfindungsgemäßen schrägverzahnten Planetengetriebes eine ausreichende Festigkeit, um ein stabil arbeitendes Planetengetriebe zur Verfügung zu stellen. Mit Hilfe des Werkstoffes Kunststoff können die Zahnräder des Planetengetriebes außerdem besonders kostengünstig, beispielsweise im Spritzgussverfahren, hergestellt werden. Durch die Ausbildung aus Kunststoff ergibt sich darüber hinaus eine leichte Formbarkeit und große Gestaltungsfreiheit bei der Ausbildung der Planetenräder. Es hat sich zudem gezeigt, dass das erfindungsgemäße Planetengetriebe durch die Schrägverzahnung extrem leise ist und durch die Planetenbauweise eine sehr gute Tragfähigkeit besitzt. Mit dem erfindungsgemäßen Planetengetriebe sind selbst hohe Drehmomente ohne Weiteres übertragbar.

Das Modul des erfindungsgemäßen Planetengetriebes errechnet sich hierbei definitionsgemäß als Quotient aus dem Teilkreisdurchmesser eines Planetenrades in Millimetern und der Zähnezahl des Planetenrades. Durch die bei der vorliegenden Erfindung vorgesehenen kleinen Module können somit bei relativ kleinem Durchmesser relativ viele Zähne vorgesehen werden, wodurch eine besonders effektive Kraftübertragung möglich ist.

Gemäß einer vorteilhaften Ausführungsform der vorliegenden Erfindung weist der Planetenträger einen Steg und einen Deckel auf, wobei der Steg und der Deckel einander gegenüberliegende Bohrungen aufweisen und beidseitig an den Planetenrändern Lagerzapfen vorgesehen sind, die in den Bohrungen gelagert sind. Durch die beidseitig gelagerten Planetenräder kann eine effiziente Kraftübertragung und ein gutes Tragbild bei dem erfindungsgemäßen Planetengetriebe realisiert werden.

Entsprechend einer besonders bevorzugten Ausführungsvariante der Erfindung umfasst das Planetengetriebe wenigstens zwei kaskadenartig angeordnete Planetenträger, die derart miteinander gekoppelt sind, dass der Planetenträger einer vorherigen Kaskadenstufe des Sonnenrad der nächsten Kaskadenstufe trägt. Durch die Kaskadierbarkeit des erfindungsgemäßen Planetengetriebes ist eine sehr hohe Übersetzung möglich, wobei die Übersetzung durch den jeweiligen Aufbau der Kaskade variabel gestaltbar ist.

Es ist besonders zweckmäßig, wenn der Planetenträger der vorherigen Kaskadenstufe und das Sonnenrad der nächsten Kaskadenstufe als ein Spritzgussteil ausgebildet sind. Somit lässt sich der Aufbau des erfindungsgemäßen Planetengetriebes besonders einfach und preiswert realisieren.

Entsprechend einem anderen, auch geeigneten Aufbau des erfindungsgemäßen Planetengetriebes ist zwischen dem Planetenträger der vorherigen Kaskadenstufe und dem Sonnenrad der nächsten Kaskadenstufe eine Kupplung vorgesehen, welche eine Nut in einem Boden des Stegs des Planetenträgers der vorherigen Kaskadenstufe und ein in die Nut einpassbares Gegenstück an dem Sonnenrad der nächsten Kaskadenstufe umfasst. Somit ist es auch möglich, den Planetenträger der vorherigen Kaskadenstufe mit dem Sonnenrad der nächsten Kaskadenstufe kraftschlüssig zu koppeln.

Es ist besonders von Vorteil, wenn die Planetenräder als Mikrospritzgussteile ausgebildet sind. Obwohl der Mikrospritzguss im Allgemeinen nicht einfach zu handhaben ist, lassen sich die Planetenräder des erfindungsgemäßen Planetengetriebes trotz ihrer Kleinheit überraschenderweise besonders leicht und preisgünstig als Mikrospritzteile ausbilden. Durch das Mikrospritzgießen ergibt sich eine hohe Variabilität bei der Formbildung der Planetenräder.

Entsprechend einem Beispiel der Erfindung sind jeweils miteinander in Eingriff stehende Zahnräder des Planetengetriebes paarweise aus Polyoxymethylen (POM) und Polybuthylenterephthalat (PBT) als Reibpartner ausgebildet. Diese Werkstoffpaarung eignet sich besonders gut, um auf Dauer eine hohe Abriebfestigkeit der Zahnräder des erfindungsgemäßen Planetengetriebes zu gewährleisten.

Gemäß einer besonders bevorzugten Ausführungsform der vorliegenden Erfindung weisen die Planetenräder eine Verzahnungsbreite auf, welche etwa der Größe ihres Durchmessers entspricht. Entsprechend sind die verwendeten Planetenräder besonders klein und kompakt dimensionierbar, so dass das erfindungsgemäße Planetengetriebe klein und leicht gestaltet werden kann.

In einem Beispiel der Erfindung weisen die Zahnräder des erfindungsgemäßen Planetengetriebes eine Schrägverzahnung mit einem Schrägungswinkel von 15° zur Achsrichtung des Planetengetriebes auf. Dadurch weist das erfindungsgemäße Planetengetriebe eine sehr geringe Geräuschentwicklung auf.

Es hat sich als besonders günstig erwiesen, wenn das Planetengetriebe der vorliegenden Erfindung in einem Kleinantrieb zur Gurthöhenverstellung in einem Fahrzeug eingebaut ist. Da der Kleinantrieb durch das erfindungsgemäße Planetengetriebe klein und leicht gestaltet werden kann, kann er direkt an einem Mechanismus zur Gurthöhenverstellung montiert werden, wodurch der Platz in dem Fahrzeug effektiv genutzt werden kann.

Die vorliegende Erfindung wird im Folgenden anhand eines Ausführungsbeispiels näher erläutert, wobei

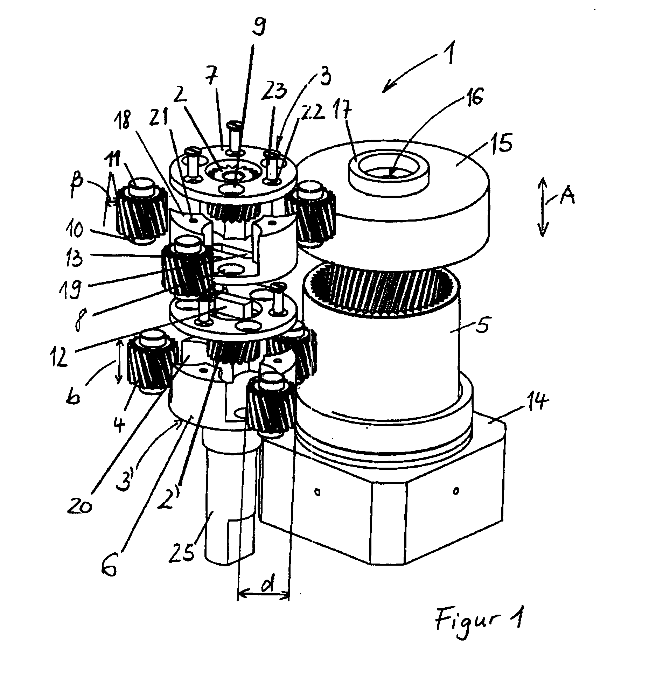

**Fig. 1** eine Explosivdarstellung einer möglichen Ausführungsvariante eines schrägverzahnten Planetengetriebes gemäß der vorliegenden Erfindung ist.

**Fig.1** zeigt in einer Explosivdarstellung eine mögliche Ausführungsvariante eines erfindungsgemäßen Planetengetriebes **1.**

Das Planetengetriebe **1** weist einen Sockel **14** auf, auf welchen ein innenverzahntes Hohlrad **5** aufgesetzt ist. Das Hohlrad **5** ist schrägverzahnt, wobei der Winkel β der Schrägverzahnung etwa 10° bis etwa 30° zu der mit dem Bezugszeichen A gekennzeichneten Achsrichtung des Planetengetriebes **1** beträgt.

Das Hohlrad **5** ist in dem gezeigten Ausführungsbeispiel durch einen Abdeckzylinder **15** abgedeckt. Der Abdeckzylinder **15** hat im Wesentlichen eine Stützfunktion für die gezeigte Planetengetriebekonstruktion und weist eine zentrale Öffnungsbohrung **16** auf, welche von einem Kragen **17** umfasst ist. Durch die Öffnungsbohrung **16** kann eine in **Fig. 1** nicht dargestellte Motorwelle eingebracht werden. Mit Hilfe des Kragens **17** kann der mit der Motorwelle verbundene und in **Fig. 1** ebenfalls nicht dargestellte Motor zum Antreiben der Motorwelle zentriert werden.

Das Hohlrad **5** ist in der in **Fig. 1** gezeigten Ausführungsvariante als ein Block dargestellt, kann aber in anderen Ausführungsvarianten der Erfindung aus mehreren übereinander angeordneten Bauteilen aufgebaut sein, wobei die Herstellbarkeit des Hohlrades **5** erleichtert werden kann. Beispielsweise können mehrere Stufen von Teilhohlrädern **5** in einer Hülse eingebaut sein.

Im Inneren des Hohlrades **5** befindet sich die in **Fig. 1** links in Explosivdarstellung dargestellte Anordnung, welche in dem gezeigten Beispiel zwei kaskadenartig übereinander angeordnete und miteinander gekoppelte Planetenträger **3, 3'** aufweist.

Die Planetenträger **3, 3'** weisen jeweils einen Steg **6** und einen zugehörigen Deckel **7** auf. Der Steg **6** besitzt einen etwa scheibenförmigen Boden **13** und mehrere, gleichmäßig am Umfang des Stegs **6** angeordnete und sich axial erstreckende Stollen **18.** Zwischen den Stollen **18** sind Bohrungen **8** in dem Boden **13** zur Aufnahme von Lagerzapfen **10** von Planetenrädern **4** vorgesehen. Desweiteren ist etwa mittig in dem Boden **13** eine Nut **19** vorgesehen, in welche ein entsprechendes Gegenstück **12,** das an einem Sonnenrad **2'** des nächsten Planetenträgers **3'** vorgesehen ist, eingepasst werden kann.

Die Stollen **18** weisen einen etwa glockenförmigen Querschnitt mit konkaven seitlichen Ausnehmungen **20** auf, so dass zwischen jeweils zwei Stollen **18** ein Planetenrad **4,** gelagert in einer Bohrung **8** eingepasst werden kann. Der Abstand zwischen zwei Stollen **18** ist dabei so groß, dass jeweils ein Planetenrad **4** ungehindert zwischen den Stollen **18** rotieren kann.

In den Stollen **18** sind an der dem Boden **13** nicht zugewandten Seite Bohrungen **21** vorgesehen, welche zugehörigen Bohrungen **22** in dem Deckel **7** gegenüber sind. In die Bohrungen **22, 21** können in dem angezeigten Ausführungsbeispiel Schrauben **23** oder auch andere Verbindungselemente eingeführt werden, um den Deckel 7 mit dem Steg **6** zu verbinden.

Die in **Fig. 1** dargestellte Schraubverbindung zwischen Steg **6** und Deckel **7** kann auch durch eine Knackverbindung oder eine Klebeverbindung ersetzt werden.

In dem in **Fig. 1** gezeigten Ausführungsbeispiel weist der Deckel **7** mittig eine Öffnungsbohrung **24** zum Einführen der Motorwelle auf. An der Motorwelle ist ein Sonnenrad **2** vorgesehen. Das Sonnenrad **2** ist innerhalb des Planetenträgers **3** und in Relation zu den Stollen **18** des Stegs **6** mittig angeordnet und rotiert mit der Motorwelle. Das Sonnenrad **2** weist eine Schrägverzahnung mit einem Winkel β von etwa 10° bis etwa 30° zur Achsrichtung A des Planetengetriebes **1** auf.

Das Sonnenrad **2** ist aus Kunststoff ausgebildet. In dem in **Fig. 1** gezeigten Beispiel ist das Sonnenrad **2** aus Polyoxymethylen (POM) als Spritzgussteil ausgebildet. In anderen, nicht gezeigten Ausführungsvarianten der Erfindung kann das Sonnenrad **2** auch aus einem anderen Kunststoff, vorzugsweise einem spritzbaren Kunststoff, ausgebildet sein.

In dem in **Fig. 1** gezeigten Beispiel ist der Planetenträger **3** zur Aufnahme von drei Planetenrädern **4** ausgebildet. In anderen, nicht gezeigten Ausführungsvarianten der vorliegenden Erfindung kann der Planetenträger **3** auch mit zwei oder mehr als drei Planetenrädern **4** ausgestattet sein.

Auch wenn in dem in **Fig. 1** gezeigten Beispiel der Planetenträger **3** und der Planetenträger **3'** im Wesentlichen ähnlich, mit jeweils drei Planetenrädern **4** ausgestattet sind, können die kaskadenartig angeordneten Planetenträger **3, 3'** auch eine unterschiedliche Anzahl von Planetenrädern **4** aufweisen. So kann bei Einsatz weniger Planetenräder **4** eine große Übersetzung realisiert werden, während bei einem Einsatz von vielen Planetenrädern **4** die Übersetzung an **2** angenähert werden kann, wobei eine hohe Tragfähigkeit zur Verfügung gestellt werden kann.

Die Planetenräder **4** weisen eine Schrägverzahnung mit einem Winkel β von etwa 10° bis etwa 30° zur Achsrichtung A des Planetengetriebes **1** auf. Die Verzahnungsbreite b der Planetenräder **4** entspricht etwa der Größe des Durchmessers d der Planetenräder **4.** Die Planetenräder **4** sind aus Kunstsoff ausgebildet. In dem in **Fig. 1** gezeigten Beispiel bestehen die Planetenräder **4** aus Polybuthylenterephthalat (PBT), können aber in anderen Ausführungsformen der Erfindung auch aus einem anderen geeigneten Kunststoffmaterial, vorzugsweise einem spritzbaren Kunststoffmaterial, ausgebildet sein. Die Planetenräder **4** sind in der in **Fig. 1** gezeigten Ausführungsform als Mirkrospritzteile ausgebildet.

Die Kunststoffe Polyoxymethylen (POM) und Polybuthylenterephthalat (PBT), welche als Reibpartner für die paarweise Ausbildung von in Eingriff stehenden Zahnrädern **2, 4, 5** des Planetengetriebes **1** eingesetzt werden, sind besonders gut geeignet, um das erfindungsgemäße Planetengetriebe **1** langzeitstabil mit einem geringen Verschleiß einsetzen zu können.

Die Planetenräder **4** weisen ein Modul m von etwa 0,1 mm bis etwa 0,6 mm, vorzugsweise von 0,25 mm auf und sind beidseitig in dem Steg **6** bzw. dem Deckel **7** der Planetenträger **3, 3'** mit Hilfe der beidseitig nach oben bzw. nach unten ragenden Lagerzapfen **10, 11** gelagert. Durch die beidseitige Lagerung der Planetenräder **4** sind diese zweifach gefangen und können dadurch besonders sicher in dem jeweiligen Planetenträger **3, 3',** im Vergleich zu dem im Stand der Technik bekannten fliegenden Varianten, gelagert werden.

Mit Hilfe des Deckels **7,** der die Planetenräder **4** an ihrer Oberseite fängt, kann eine sichere Lagerung der Planetenräder **4** insbesondere auch deswegen realisiert werden, da die Planetenräder **4** aus Kunststoff bestehen und damit weniger steif als die im Stand der Technik bekannten Metallzahnräder sind.

An dem Sonnenrad **2,** das mittig in dem Planetenträger **3'** in der **Fig. 1** gezeigten Ausführungsform vorgesehen ist, ist einseitig ein Vorsprung ausgebildet, welcher ein Gegenstück **12** zu der in dem Boden **13** des Planetenträgers **3** ausgebildeten Nut **19** bildet. Indem das Gegenstück **12** in die Nut **19** eingepasst wird, wird das Sonnenrad **2'** mit dem Planetenträger **3** kraftschlüssig verbunden. In einer anderen nicht gezeigten Ausführungsvariante der vorliegenden Erfindung kann der Planetenträger **3** der vorherigen Kaskadenstufe mit dem Sonnenrad **2'** der nächsten Kaskadenstufe einstückig, beispielsweise als Spritzgussteil, ausgebildet sein.

Der Planetenträger **3'** ist an seinem Boden **13** mit einer Welle **25** verbunden, welche in dem Sockel **14** des Planetengetriebes **1** gelagert ist.

Das erfindungsgemäße Planetengetriebe **1** weist eine Reihe von Vorteilen auf. Es arbeitet durch die Schrägverzahnung der Zahnräder, wie den Sonnenrädern **2, 2',** den Planetenrädern **4** und dem Hohlrad **5** extrem leise. Durch die Kaskadierbarkeit des erfindungsgemäßen Planetengetriebes **1,** welche eine nahezu unbegrenzte Anzahl von miteinander gekoppelten Planetenträgern **3, 3'** mit jeweiligen Sonnenrädern **2, 2'** und Planetenrädern **4** erlaubt, ist eine sehr hohe Übersetzung möglich, wobei die Übersetzung variabel gestaltbar ist. Durch die Planetenbauweise des erfindungsgemäßen Getriebes **1** ergibt sich zudem eine gute Tragfähigkeit bei hohen Drehmomenten.

Die in dem erfindungsgemäßen Planetengetriebe **1** vorgesehenen Kunststoffräder **2, 4, 5** sind beispielsweise im Spritzgussverfahren kostengünstig herstellbar.

Darüber hinaus kann durch die beidseitig gelagerten Planetenräder **4** eine gute Kraftübertragung und ein gutes Tragbild ermöglicht werden.

Indem Werkstoffe wie POM und PBT im Spritzgussverfahren zur Herstellung der Zahnräder **2, 4, 5** eingesetzt werden, ergibt sich zudem eine leichte Formbarkeit und große Gestaltungsfreiheit bei der Herstellung der Zahnräder für das erfindungsgemäße Planetengetriebe **1.**

Während im Stand der Technik für schrägverzahnte Planetengetriebe durchweg nur Zahnräder aus Metall und/oder allgemein für Planetengetriebe zumeist sehr flache Zahnräder eingesetzt werden, können die Zahnräder **2, 4, 5** des erfindungsgemäßen Planetengetriebes **1** trotz des Einsatzes von Kunststoff bis an die Grenze der Belastbarkeit belastet werden, so dass ein Leistungsgetriebe zur Verfügung gestellt werden kann. Beispielsweise können die Planetenräder **4** des in **Fig. 1** gezeigten Ausführungsbeispiels des erfindungsgemäßen Planetengetriebes **1** eine Breite von nur etwa 4 mm aufweisen, wodurch das gesamte Planetengetriebe sehr klein und leicht gestaltet werden kann.

## Patentansprüche

1. Schrägverzahntes Planetengetriebe (1) mit einem mittig angeordneten Sonnenrad (2), einem Planetenträger (3), wenigstens zwei von dem Planetenträger (3) gehaltenen und mit dem Sonnenrad (2) in Eingriff stehenden Planetenrädern (4) und einem innenverzahnten Hohlrad (5), das mit den Planetenrädern (4) in Eingriff steht, **dadurch gekennzeichnet, dass** das Sonnenrad (2), die Planetenräder (4) und das Hohlrad (5) aus Kunststoff ausgebildet sind, und die Planetenräder (4) ein Modul (m) von etwa 0,1 mm bis etwa 0,6 mm aufweisen.

2. Planetengetriebe nach Anspruch 1, **dadurch gekennzeichnet, dass** der Planetenträger (3) einen Steg (6) und einen Deckel (7) aufweist, wobei der Steg (6) und der Deckel (7) einander gegenüberliegende Bohrungen (8, 9) aufweisen und beidseitig an den Planetenrädern (4) Lagerzapfen (10, 11) vorgesehen sind, die jeweils in den Bohrungen (8, 9) gelagert sind.

3. Planetengetriebe nach einem der vorhergehenden Ansprüche, **dadurch gekennzeichnet, dass** das Planetengetriebe (1) wenigstens zwei kaskadenartig angeordnete Planetenträger (3, 3') aufweist, die derart miteinander gekoppelt sind, dass der Planetenträger (3) einer vorherigen Kaskadenstufe das Sonnenrad (2') der nächsten Kaskadenstufe trägt.

4. Planetengetriebe nach Anspruch 3, **dadurch gekennzeichnet, dass** der Planetenträger (3) der vorherigen Kaskadenstufe und das Sonnenrad (2') der nächsten Kaskadenstufe als ein Spritzgussteil ausgebildet sind.

5. Planetengetriebe nach Anspruch 2 und 3, **dadurch gekennzeichnet, dass** zwischen dem Planetenträger (3) der vorherigen Kaskadenstufe und dem Sonnenrad (2') der nächsten Kaskadenstufe eine Kupplung vorgesehen ist, welche eine Nut in einem Boden (13) des Stegs (6) des Planetenträgers (3) der vorherigen Kaskadenstufe und ein in die Nut einpassbares Gegenstück (12) an dem Sonnenrad (2') der nächsten Kaskadenstufe umfasst.

6. Planetengetriebe nach einem der vorhergehenden Ansprüche, **dadurch gekennzeichnet, dass** die Planetenräder (4) als Mikrospritzgussteile ausgebildet sind.

7. Planetengetriebe nach einem der vorhergehenden Ansprüche, **dadurch gekennzeichnet, dass** jeweils miteinander in Eingriff stehende Zahnräder (2, 4, 5) des Planetengetriebes (1) paarweise aus Polyoxymethylen (POM) und Polybuthylenterephthalat (PBT) ausgebildet sind.

8. Planetengetriebe nach einem der vorhergehenden Ansprüche, **dadurch gekennzeichnet, dass** die Planetenräder (4) eine Verzahnungsbreite (b) aufweisen, welche etwa der Größe Ihres Durchmessers (d) entspricht.

9. Planetengetriebe nach einem der vorhergehenden Ansprüche, **dadurch gekennzeichnet, dass** die Zahnräder (2, 4, 5) des Planetengetriebes (1) eine Schrägverzahnung mit einem Winkel (β) von etwa 10° bis etwa 30° zur Achsrichtung (A) des Planetengetriebes (1) aufweisen.

10. Planetengetriebe nach einem der vorhergehenden Ansprüche, **dadurch gekennzeichnet, dass** das Planetengetriebe (1) in einem Kleinantrieb zur Gurthöhenverstellung in einem Fahrzeug eingebaut ist.
